# EUROPEAN PATENT SPECIFICATION

(11) **EP 3 647 890 B1**
(45) Date of publication and mention of the grant of the patent: **16.03.2022**
(21) Application number: 18203193.0
(22) Date of filing: 29.10.2018
(51) Int. Cl.: G05B 19/048, G05B 19/418

(54) **ASSEMBLY SYSTEM AND METHOD FOR OPERATING AN ASSEMBLY SYSTEM**
MONTAGESYSTEM UND VERFAHREN ZUM BETREIBEN EINES MONTAGESYSTEMS
SYSTÈME D'ASSEMBLAGE ET PROCÉDÉ POUR FAIRE FONCTIONNER UN SYSTÈME D'ASSEMBLAGE

(43) Date of publication of application: 06.05.2020
(73) Proprietor: Omron Corporation, Kyoto-shi, Kyoto 600-8530 (JP)
(72) Inventor: HAAK, William, 5234 GM 's-Hertogenbosch (NL); OSKAM, Tom, 5234 GM 's-Hertogenbosch (NL)
(74) Representative: Horn Kleimann Waitzhofer Patentanwälte PartG mbB

(56) References cited:
- EP-A1- 2 745 999
- WO-A1-2015/172817
- WO-A2-2007/044558
- US-A1- 2013 325 155

## Description

The present invention relates to an assembly system. Further, the invention relates to a method for operating such an assembly system.

Assembly systems are sometimes used to manually assemble components into a product. Such assembly systems can comprise storage units such as bins for holding the components. A user may take the components from the storage units and assemble them on a work surface according to assembly instructions. It may be important to avoid an incorrect assembly of the components, as such an incorrect assembly could lead to a misfunction of the finished product. Document EP 2 957 973 A1 discloses a manual picking workstation with a plurality of component bins. The workstation tracks the order in which a user accesses the components bins using a light device capable of detecting a beam breakage when a component bin is accessed.

Documents US 7,515,981 B2, WO 2007/044558 A2 and US 2013/0325155 A1 disclose an operational guide system comprising visual indicators for indicating the next step of a manufacturing process to a user.

Documents WO 2015/172817 A1 and EP 2 745 999 A1 disclose camera-based position detectors for detecting a position of components or of component holders.

It is one object of the present invention to provide an assembly system that is capable of assisting the user in assembling the components into the product. Another object of the present invention is the provision of an improved method for operating such an assembly system.

The above objects are solved by an assembly system and a method for operating an assembly system according to the independent claims. Embodiments are described in the dependent claims.

According to a first aspect, an assembly system for assisting a user in assembling components into a product in accordance with assembly instructions is provided. The assembly system comprises:
at least two storage units for holding different components;
machine-readable labels, each label being attached to one of the storage units and indicating a content of that storage unit;
a camera unit configured to capture an image of the assembly system including the labels; and a controller configured to determine a respective position of the at least two storage units based on the image captured by the camera unit.

The controller of the assembly system may determine the position or location of each storage unit by analyzing the image of the assembly system including the labels captured by the camera unit. That way, the controller obtains information relating to the components provided with the assembly system and can instruct the user assembling the components into the product accordingly. In particular, the location and presence of the components may be tracked using the labels. A more flexible assembly system is provided, as the assembly system can easily recognize the components contained in the storage units of the assembly systems, even when the components are changed. The assembly system is thus able to learn its own hardware configuration.

The assembly system may be a work bench or work station. The storage units of the assembly system can include bins, containers and/or shelves. These storage units can be arranged next to one another such that the user can easily access each of the storage units when using the assembly system. For example, the storage units can be open on a side facing the user to facilitate the picking of the components. In particular, the assembly system can include a work surface for assembling the components into the product. The assembly of the components into the product can be thought of as a manufacturing of the product.

The components can include mechanical components (such as screws, washers or nails), electrical components (such as integrated circuits, diodes, batteries or switches), chemical components or the like. The components can also include tools necessary for the assembly of the product, such as screwdrivers, soldering irons or pipettes. If the user correctly follows the assembly instructions when assembling the components, he should obtain the correctly assembled product. The assembly instructions can be thought of as a recipe. They may include different steps indicating which component should be picked next and how it should be assembled with previously picked components.

The machine-readable labels are visual representation of data indicating the content of the storage unit. In other word, the label of a storage unit allows an identification of the components stored in said storage unit. The term "content" here designates components that are actually present in the storage unit as well as components which are meant to be stored in the storage unit. "Machine-readable" means that a machine can be used to identify the components associated with the label. In particular, each component type has a predetermined unique label associated thereto. The labels may be one, two or three-dimensional codes, in particular barcodes or QR codes.

The camera unit can be a two-dimensional and/or a three-dimensional camera. It can be removably attached to a holder of the assembly system. In particular, in the assembly system, the camera unit is orientated such as to capture images of at least the part of the assembly system which includes the labels. The placement (or position) of the camera unit does not have to be selected very accurately because the controller can detect the positions of the storage units independently of the exact placement of the camera unit.

The camera unit may also be orientated towards a mirror that is attached to the assembly system. The camera unit can then acquire the image of the assembly system via the mirror. The mirror allows an increase of the distance between the camera unit and the assembly system. That way, the size of the portion of the assembly system that can be captured with the camera unit can be increased without having to move the camera unit further away from the assembly system.

The image captured by the camera unit can be transmitted to the controller of the assembly system. The controller can be a CPU (central processing unit). The controller may analyze the image received by the camera unit in order to determine the positions of the respective storage units. In order to determine the position of each storage unit, the controller may recognize the positions of the labels of the assembly system. Since each label is associated with a storage unit, the controller can derive the positions of the storage units from the information about the position of the labels.

In particular, the step of capturing the image of the assembly system including the labels performed by the camera unit and the step of determining the positions of the storage units based on this image by the controller may be part of a calibration of the assembly system. The controller may store the determined information about the positions of the storage units for later use.

According to an embodiment, the assembly system further comprises a projector unit configured to project the assembly instructions onto the assembly system based on the positions of the at least two storage units determined by the controller.

By projecting the assembly instructions onto the assembly system, the user can be guided through the assembly of the product and an incorrect assembly of the components can be avoided. The assembly instructions can be projected in view of the positions of the storage units that were determined by the controller. For example, the projection of the assembly instructions can include a projection of light onto the storage unit comprising the next component to be taken by the user.

The projector unit may be removably attached to a holder of the assembly system. In particular, the projector unit is arranged on the assembly system such as to project the assembly instructions on the work surface, on the storage units and/or on a screen of the assembly system. Providing a removable projector unit is useful because it can be moved in accordance with the size and/or shape of the part of the assembly system that includes the storage units. The projector unit may be moved and/or rotated in order to select the surface of the assembly system onto which it projects the assembly instructions.

The projector unit can have a reflection unit such as a mirror associated thereto. Such a reflection unit can be useful in guiding the assembly instructions projected by the projector unit into the right direction and/or for providing a larger projected image while retaining the light intensity and resolution of the projector unit. In particular, the resolution of the camera unit is set to a suitable resolution to reduce the load on the controller. The resolution of the projector unit can remain as high as possible.

The assembly system may also include goggles (such as virtual reality goggles or augmented reality goggles) for the user to wear on his head. In this case, the projector unit may project the assembly instructions or other information directly onto the internal screen of the goggles. Alternatively, the assembly system may also comprise wearable computer glasses (also known as "smartglasses"), in which case the projector, which may be integrated into the wearable computer glasses, may be configured to project the assembly instructions or other information directly onto the user's retina.

According to a further embodiment, the assembly system further comprises machine-readable labels indicating predetermined points of the assembly system, wherein the controller is further configured to determine a size and/or shape of the assembly system based on the image captured by the camera unit.

The controller can automatically and easily determine the size and/or shape of the assembly system based on the positions of the labels that are attached to the predetermined points of the assembly system. The positions of these labels can be extracted from the image of the assembly system including the labels captured by the camera unit.

The labels indicating the predetermined points of the assembly system may be attached to these predetermined points. The predetermined points can include edges, corners, or the like of the assembly system. Each label indicating a predetermined point can include information indicating which predetermined point of the assembly system it is attached to. Said information can be machine-readable.

According to a further embodiment,
the camera unit is further configured to capture an image of a hand of the user; and
the controller is further configured to determine a position of the hand of the user based on the image of the hand captured by the camera unit.

In particular, when capturing an image of the assembly system, the camera unit may also capture an image of the hand of the user when the hand is in the range covered by the camera unit.

According to a further embodiment, the controller is further configured to determine whether the components taken by the user from the storage units match the assembly instructions, based on the determined position of the hand and on the determined position of the storage units.

In particular, the controller compares the component taken by the user with the component that the user is supposed to take according to the assembly instructions. If the user has taken the correct component as indicated by the assembly instructions, the controller determines that the taken component matches the assembly instructions. Otherwise, if the user has not taken the correct component as indicated by the assembly instructions, the controller determines that the taken component does not match the assembly instructions.

According to a further embodiment, the projector unit is further configured to project a confirmation signal and/or a warning signal onto the assembly system, based on the result of the determination whether the components taken by the user from the storage units match the assembly instructions.

By projecting the confirmation signal and/or the warning signal, the projector unit can inform the user about whether he took the right components or not, thereby monitoring the processes performed by the user. Thereby, the user can get a confirmation of his actions (through the confirmation signal) and can continue to assemble the product. Alternatively, the user can receive a warning (through the warning signal) and interrupt the assembly of the product. In this case, the user can restart assembling a new product from scratch or correct his mistake. The correct assembly of the components can thereby be tracked all along the assembly process, thereby avoiding any incorrect component assemblies.

According to a further embodiment,
the camera unit is further configured to capture an image of a glove worn on the user's hand; and
the controller is further configured to extract glove color information from the image of the glove captured by the camera unit, to recognize whether an object present on another image captured by the camera unit is a glove based on the extracted glove color information, and to recognize the presence of the hand of the user when it recognizes that the object is a glove.

The detection of the user's hand can be facilitated when the user is wearing a colored glove. In detail, the controller can recognize the presence of the hand when it detects an object having the same color or being in the same color range as the glove that is characterized by the glove color information. In particular, if the color of the glove is in high contrast with the surrounding environment, a correct measurement of the position of the glove can be ensured, even if the resolution of the camera unit is low.

The glove color information can be determined from a plurality of color measurements performed by the controller. In detail, the controller can detect the color at different points of the image of the glove capture by the camera unit and take an average thereof to determine the glove color information. Alternatively, the camera unit may capture several subsequent images of the glove and the controller can determine the glove color information by averaging a color information of the glove from each image. Such an averaging of the color information may improve the accuracy of the glove detection. The controller may store the glove color information in an appropriate storage medium such as a server, a cloud or the like.

The determination of the glove color information can be part of a calibration step of the assembly system. In such a calibration step, the user may be prompted to place his hand with the glove and/or the glove alone in front of the camera unit. The camera unit can then capture the image of the glove.

In some embodiments, the projector unit does not start projecting the assembly instructions until the glove color information has been determined. This is particularly useful in a case in which the user is required to wear gloves to avoid contamination of the product.

According to a further embodiment, the controller is further configured to:
determine which components are present in the assembly system based on the image of the labels captured by the camera unit; and
determine if all the components necessary for assembling the product in accordance with the assembly instructions are present in the assembly system based on the components which are determined to be present.

The controller may verify that all the components necessary to build the product are indeed present in the storage units of the assembly system. That way, the controller can automatically recognize missing components. In other words, the controller may determine which components are stored (or meant to be stored) in the storage units and compare these stored components with a list of components of the assembly instructions. The list of components of the assembly instructions can list all components necessary to assemble the product. In particular, the controller verifies that all components necessary to build the product are indeed present in the storage units during a configuration of the assembly system, for example before the user starts taking and assembling components.

According to a further embodiment, the projector unit is configured to project a missing component signal and/or the controller is configured to output the missing component signal if the controller determines that the components necessary for assembling the product are not all present in the assembly system.

If the controller determines that some of the components necessary for assembling the product are missing, a missing component signal can be emitted. The missing component signal can inform the user about the missing component. The user may then add a storage unit with the component that was determined to be missing. By means of this verification performed by the controller, an incorrect assembly of the product due to missing components can be avoided.

According to a further embodiment,
the projector unit is configured to project a line onto a surface of the assembly system;
the camera unit is configured to capture an image of the line projected by the projector unit; and
the controller is configured to map a reference system of the camera unit to a reference system of the projector unit based on the captured image of the line.

The projector unit and the camera unit can perform a calibration in order to map their reference systems to one another. Such a calibration may be useful in precisely projecting the assembly instructions onto a selected part of the assembly system, for example onto the storage units.

The calibration may include a projection of the line of light onto the surface of the assembly system, wherein the surface may include the labels. In particular, the projector unit swipes over the surface of the assembly system with the line of light while the camera unit captures an image of the assembly system including the line of light. The swiping (or scanning) can be performed horizontally and/or vertically. The controller can for example map the reference system of the camera unit to the reference system of the projector unit by matching various points of the assembly system to each other. These various points can form the predetermined points previously described and to which a label is assigned.

The mapping of the two reference systems may compensate for shifts and/or misalignments of the projector unit and the camera unit. In particular, the mapping of the two reference systems may allow to translate the picking location of a component on the camera unit to the projector image.

According to a further embodiment, the projector unit is configured to project a light signal onto the storage unit to indicate the next component according to the assembly instructions.

When projecting the assembly instructions, the projector unit may indicate by means of a projected light beam, which component the user should take next (next component according to the assembly instructions). The user can see a visual indication on the corresponding storage unit and easily know which component to take next. The assembly of the product may thus by facilitated by the present assembly system.

According to a further embodiment, each label allows a unique identification of the component contained in the storage unit onto which the label is attached.

Since each label allows a unique identification of the component contained in the storage unit onto which the label is attached, a machine reading the label can uniquely identify the component contained in the storage unit.

According to a further embodiment, the assembly system further comprises:
a label storage unit configured to store label information, each label information corresponding to a component;
a label generation unit for generating label information for the components necessary to form the product according to the assembly instructions for which no label information is stored in the label storage unit.

When the assembly system loads new assembly instructions, the controller checks whether the label storage unit already has label information corresponding to all the components necessary for constructing the product according to the new assembly instructions. If not, the label generation unit, which may be part of the controller or a separate entity, generates a label information for the components that do not have any label information stored in the label storage unit yet. In particular, no label information is created for the components which already have an associated label information stored in the label storage unit. Rather, for these components, the label information stored in the label storage unit are accessed by the controller and used.

The label information can be a code defining the label for each component. Once the label information for each component necessary according to the assembly instructions has been generated, the label information can be used to print the corresponding physical labels, which are then attached to the respective storage units.

According to a second aspect, a method for operating an assembly system that assists a user in assembling components into a product in accordance with assembly instructions is provided. The method comprises:
placing at least two storage units holding different components in the assembly system, each storage unit having a machine-readable label attached thereto;
capturing an image of the assembly system including the labels; and
determining a respective position of the at least two storage units based on the captured image.

The embodiments and features described with reference to the assembly system of the first aspect or of an embodiment thereof apply mutatis mutandis to the method of the second aspect.

The method according to the second aspect can be implemented in the assembly system according to the first aspect or according to an embodiment thereof. Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
- Fig. 1: shows a diagrammatic perspective view of an assembly system;
- Fig. 2: shows a diagrammatic left side view of the assembly system;
- Fig. 3: shows a diagrammatic perspective view of an example of storage units;
- Fig. 4: shows an example of labels;
- Fig. 5: shows a flowchart of a method for operating an assembly system according to a first embodiment;
- Fig. 6: shows a flowchart of a method for operating an assembly system according to a second embodiment;
- Fig. 7: shows another diagrammatic perspective view of the assembly system;
- Fig. 8A: shows an image projected by the projection unit;
- Fig. 8B: shows an image captured by the camera unit;
- Fig. 9: shows a flowchart of a method for operating an assembly system according to a third embodiment;
- Fig. 10: shows an example of a glove image;
- Fig. 11: shows a flowchart of a method for operating an assembly system according to a fourth embodiment; and
- Fig. 12: shows an example of assembly instructions.

In the Figures, like reference numerals designate like or functionally equivalent elements, unless otherwise indicated.

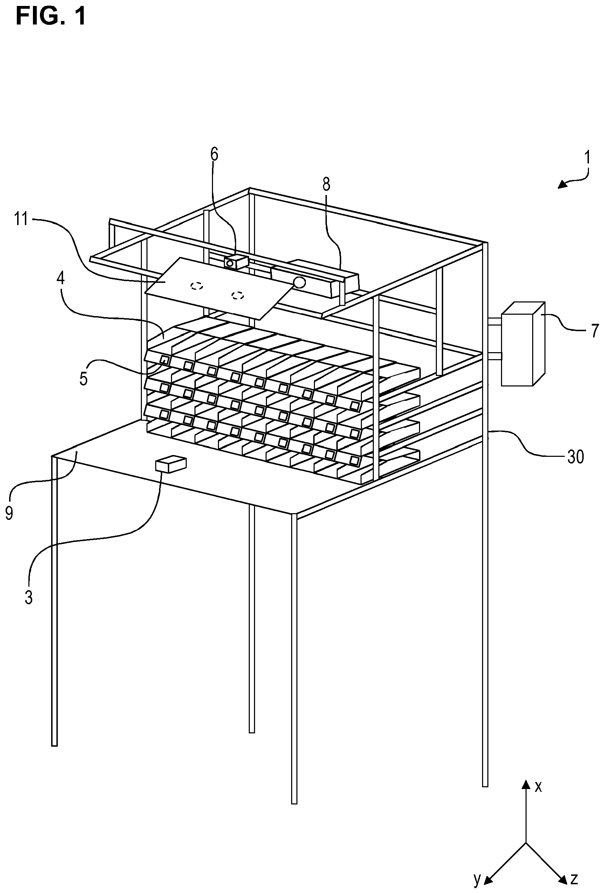

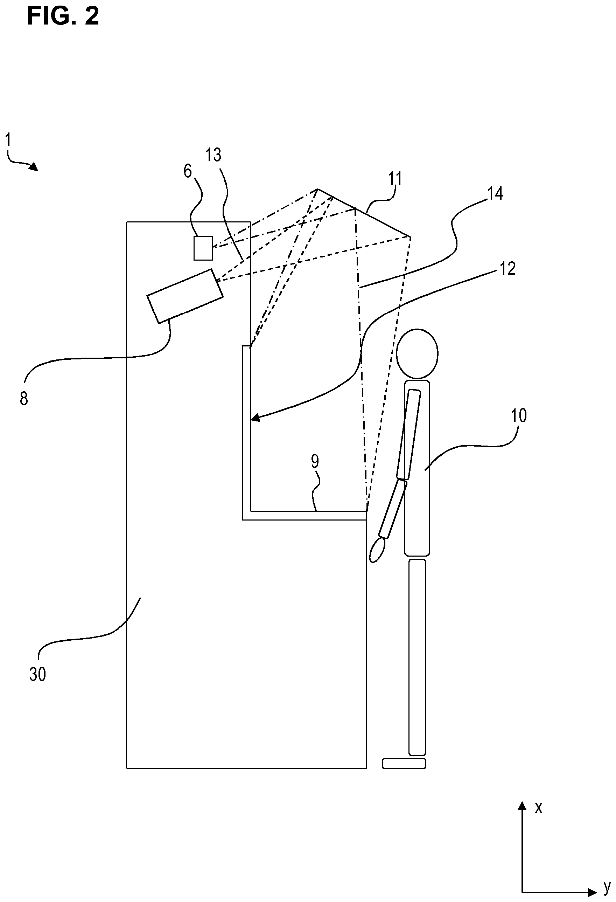

Fig. 1 shows a diagrammatic perspective view and Fig. 2 shows a diagrammatic left side view of an assembly system 1. The assembly system 1 is used in a process of manufacturing a product 3 by assembling different components (not shown). The product 3 is assembled manually by a user 10 on a work surface 9 by assembling the components according to assembly instructions.

The assembly system 1 comprises storage units 4, which are removably arranged next to one another in a picking area 12 of the assembly system 1. In the example of Fig. 1, the storage units 4 are container bins, which are open on the side facing the user 10 to facilitate the taking out of components. Only one storage unit 4 is provided with a reference sign in Fig. 1, however it is understood that all storage units shown in Fig. 1 have at least the same function of holding components. Each storage unit 4 has a machine-readable label 5 attached thereto, as will be described in greater detail below.

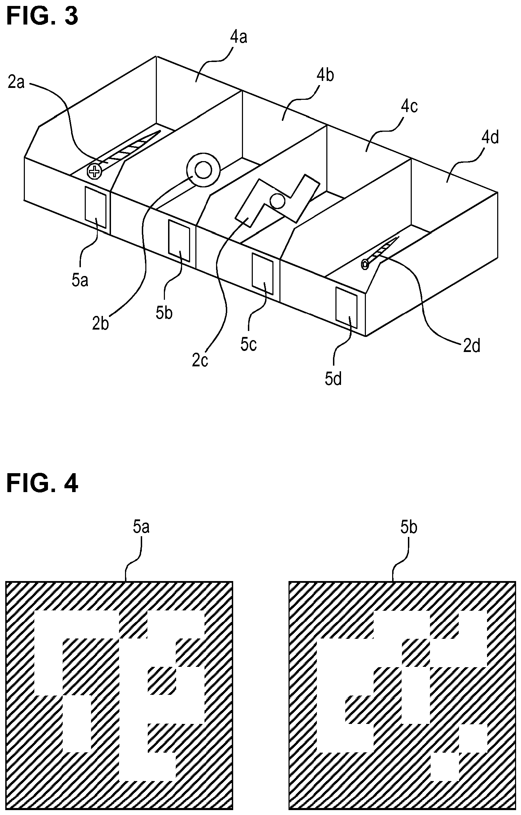

Fig. 3 shows a diagrammatic perspective view of an example of four such storage units 4, which are labelled 4a - 4d for distinction. The storage unit 4a holds components 2a, here large screws. The storage unit 4b holds components 2b, here washers. The storage unit 4c holds components 2c, here pieces of plastic formed into a particular shape. The storage unit 4d holds components 2d, here small screws. Thus, each storage unit 4a - 4d holds components of different component types.

The storage units 4a - 4d have labels 5a - 5d attached thereto, which are examples for the labels 5 of Fig. 1. The labels 5a - 5d are QR codes which indicate the type of component provided in the storage units 4a - 4d to which they are attached (see Fig. 4). The labels 5a - 5d allow a unique identification of the component 2a - 2d in the storage unit 4a - 4d to which they are attached. For example, a machine reading the label 5a will be able to determine that the storage unit 4a to which the label 5a is attached is meant to hold large screws (component 2a). The labels 5a - 5d can be attached to the storage units 4a - 4d at manufacturing and/or packing of the storage units 4a - 4d, in particular before the storage units 4a - 4d are placed into the assembly system 1. Needless to say, it is also possible to attach the labels 5a - 5d to the storage units 4a - 4d after placing them in the assembly system 1.

Beyond the elements described above, the assembly system 1 of Fig. 1 and 2 comprises a camera unit 6, a controller 7 and a projector unit 8. The camera unit 6 and the projector unit 8 may exchange data with the controller 7 through wired or wireless communication. More specifically, the camera unit 6 and the projector unit 8 may be connected to the controller 7 via a field network, such as an Ethernet or EtherCAT (registered trademark) network or the like. Optionally, the assembly system 1 includes a mirror 11.

The camera unit 6 is a 3D-camera for obtaining 3D-images of the monitored area 14. The camera unit 6 is removably attached to a work bench 30 of the assembly system 1 and orientated such as to monitor, e.g. via the mirror 11, the area 14 extending from the top of the storage units 4 of the work bench to a point in front of the work bench 30 (see Fig. 2).

Further, the projector unit 8 is used to project the assembly instructions onto parts of the assembly system 1. To this purpose, the projector unit 8 projects the assembly instructions towards the mirror 11, which reflects the assembly instructions onto a surface of the assembly system, as indicated by the light beams 13 irradiated by the projector unit 8 shown in Fig. 2.

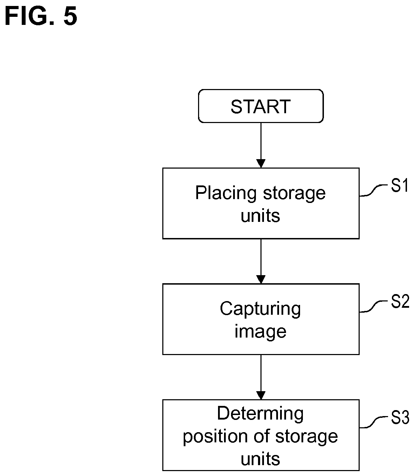

The assembly system 1 can be operated according to the method of a first embodiment shown in Fig. 5. In detail, in step S1 of Fig. 5, the storage units 4 with the labels 5 are placed into the assembly system 1. In step S2, the camera unit 6 acquires a 3D-image of at least a part of the assembly system 1 including the labels 5. This 3D-image is then analyzed by the controller 7 in step S3 in order to determine the positions of the storage units 4. In detail, the controller 7 performs an image analysis in order to detect the position of the labels 5 on the 3D-image and derives the positions of the storage units 4 from the positions of the labels 5. The positions of the storage units 4 can be represented by 3D-coordinates of the storage units 4.

The steps S1 to S3 can be part of a calibration process of the assembly system 1 in which the assembly system 1 can autonomously determine its hardware-layout.

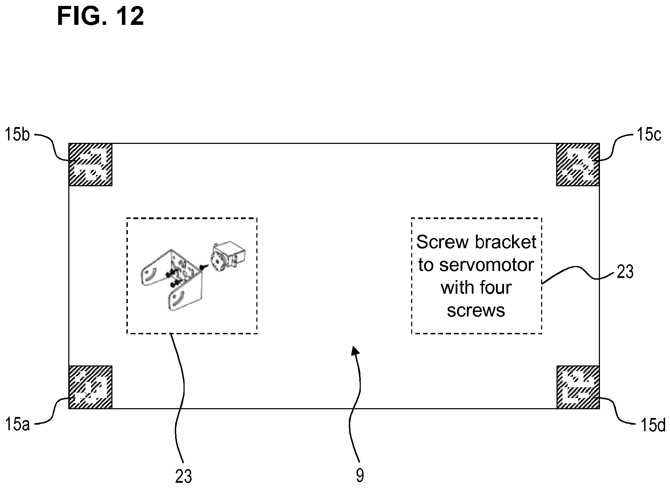

In a facultative operation step that follows the step S3 (not shown in Fig. 5), the projector unit 8 projects the assembly instructions 23 onto the work surface 9 of the assembly system 1. Such assembly instructions 23 are for example shown in Fig. 12 and include an assembly image and an instruction text. The projection of the assembly instructions 23 facilitate the assembly of the product by the user 10.

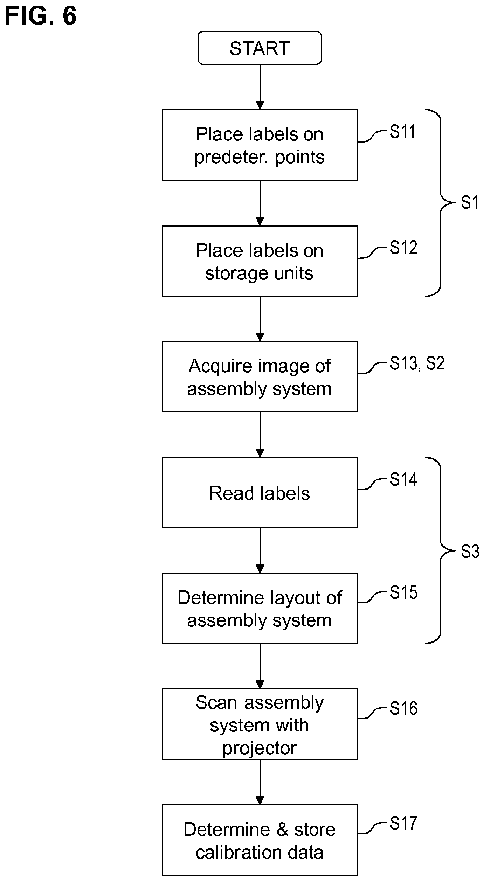

The assembly system 1 can also be operated according to the method of a second embodiment shown in Fig. 6. The method according to the second embodiment is a calibration method and can be thought of as an improved version of the method according to the first embodiment of Fig. 5.

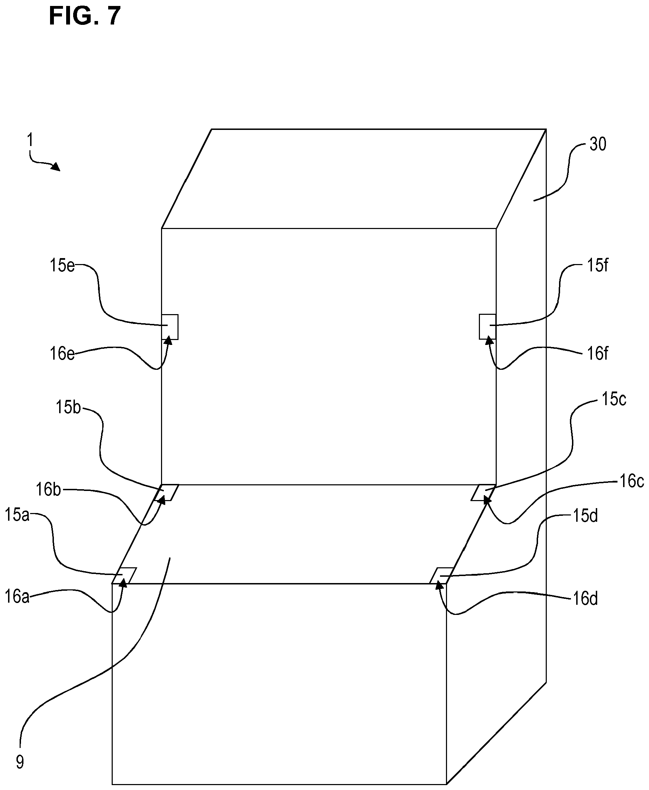

In detail, in step S11 of Fig. 6, further machine-readable labels 15a - 15f are attached to the assembly system 1. Such further labels 15a - 15f are shown in Fig. 7, which shows a further view of the assembly system 1. The further labels 15a - 15f are attached to the assembly system 1 at predetermined points 16 - 16f of the assembly system 1. Like the labels 5a - 5d, the labels 15a - 15f are also QR codes. However, instead of providing an information about a component 2a - 2d, each further label 15a - 15f uniquely provides an information about the predetermined point 16a - 16f to which it is attached. For example, the label 15a indicates that it is attached to the front left corner of the work surface 9. Similarly, the label 15f indicates that it is attached to the right upper corner of the part of the assembly system 1 which comprises the storage units 4. In the present example, the predetermined points 16a - 16f are points that are chosen in advance by the user 10 as judicious key points of the assembly system 1.

In step S12 of Fig. 6, the labels 5 are attached to the respective storage units 4, as described above in view of Fig. 1 to 4. The steps S11 and S12 can be considered as part of step S1 of the method for operating the assembly system 1 according to the first embodiment (Fig. 5).

In step S13 of Fig. 6, the camera unit 6 captures an image of the assembly system 1 including the labels 5, 15a - 15f. The step S13 corresponds to the previously described step S2 of the method for operating the assembly system 1 according to the first embodiment (Fig. 5). Step S13 can be considered as a depth reference measurement in which a 3D-image of the assembly system 1 is acquired by the camera unit 6 and stored as a reference image for later use.

In step S14 of Fig. 6, the controller 7 detects and reads the labels 5, 15a - 15f. This means that the controller 7 extracts the information provided by the labels 5, 15a - 15f from the image acquired in step S13. Further, the controller 7 determines the 3D-coordinates of the labels 5, 15a - 15f and stores these in a storage medium.

Based on the read labels 5, 15a - 15f, the controller 7 determines a layout of the assembly system 1 in step S15 of Fig. 6. In detail, the controller 7 determines the size and shape of the work bench 30, including the size and shape of the work surface 9.

The controller 7 may initiate a depth reference measurement of the assembly system 1 with the camera unit 6.

The steps S14 and S15 can be part of step S3 of the method for operating the assembly system 1 according to the first embodiment (Fig. 5).

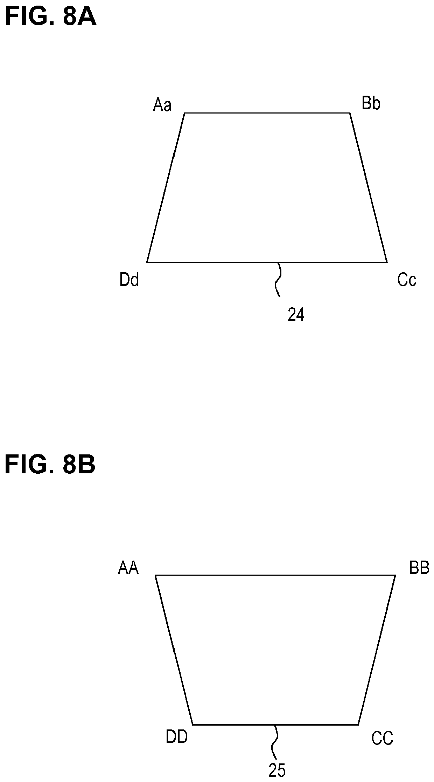

In step S16 of Fig. 6, the projector unit 8 scans (i.e. irradiates light in a scanning manner onto) the assembly system 1 in order to map the reference systems of the projector unit 8 and of the camera unit 6 onto each other. In detail, due to the orientation of the camera unit 6 and due to its lens, images captured by the camera unit 6 are slightly distorted. For example, the rectangular work surface 9 may look trapezoidal on an image 25 captured by the camera unit 6 (see Fig. 8B). Additionally, due to the use of the mirror 11, the image 24 projected by the projector unit 8 onto the work surface 9 is also distorted. In detail, said image 24 has a mirrored trapezium shape as compared to the image 25 of the camera unit 6 (see Fig. 8A).

In order to compensate for these distortions as well as for other shifts, the projector unit 8 scans the assembly system vertically and horizontally with a line of light. While the scans are being performed, the camera unit 6 captures images of the line. The controller 7 then finds the coordinates of points A, B, C and D (corresponding to the corners of the work surface 9) in the reference system of the projector unit 8 (coordinates Aa, Bb, Cc and Dd in Fig. 8A) and in the reference system of the camera unit 6 (coordinates AA, BB, CC and DD in Fig. 8B). The controller 7 then determines a relationship between the two reference systems with which the distortions between the two reference systems can be compensated.

The steps S11 to S17 of Fig. 6 can be considered as calibration steps performed before starting an assembly of components 2a - 2d. In step S17, the controller 7 determines calibration data based on the layout of the assembly system 1 determined in step S15 and based on the mapping of the reference systems of the projector unit 8 and of the camera unit 6 of step S16. This calibration data is stored in a storage medium, such as a server, cloud or other suitable storage device, for use when assembling the components 2a - 2d into the product 3. More specifically, the calibration data may include transformation parameters for a suitable coordinate transformation that ensures that the image projected by the projector 8 can be imaged by the camera unit 6 without distortion.

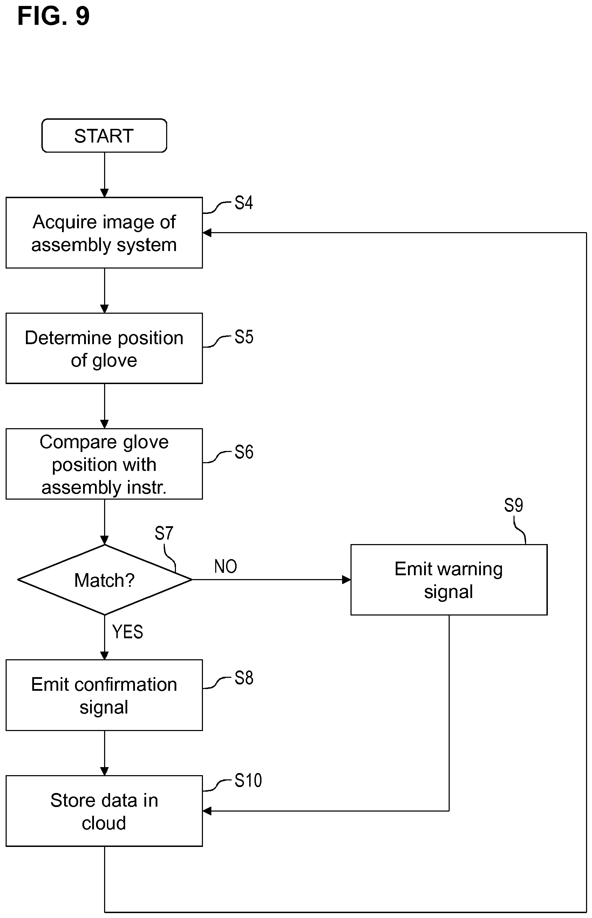

The assembly system 1 can also be operated according to the method of a third embodiment shown in Fig. 9. In detail, in step S4 of Fig. 9, the camera unit 6 acquires a color and depth image of the assembly system 1. In detail, the color and depth image corresponds to a 3D color image of the assembly system 1.

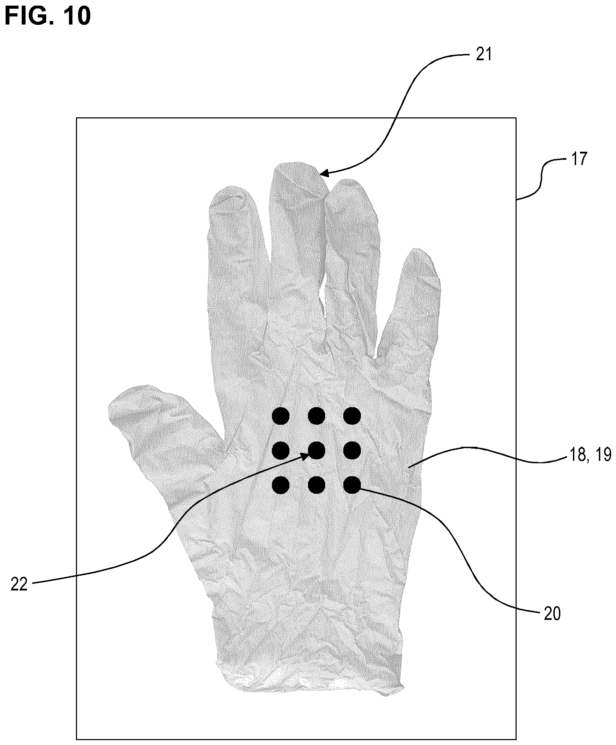

In step S5 of Fig. 9, the controller 7 determines the 3D-coordinates of a glove 19 worn by the user 10 on his hand 18. Such a glove 19 is shown in Fig. 10. In detail, Fig. 10 shows an image 17 of the glove 19 acquired during calibration by the camera unit 6. During said calibration process, the glove 19 is first placed on the work surface 9 and the camera unit 6 takes an image 17 of the glove 19 on the work surface 9. Then, the controller 7 performs nine color measurements at nine measurement points 20 of the glove image 17 and averages the color information obtained during these color measurements to obtain glove color information. The glove color information is stored in a storage medium.

In step S5 of Fig. 9, in order to determine the position of the glove 19, the controller searches the image of the assembly system 1 obtained in step S4 for an object that is of the same color as the glove 19 and has the same glove color information. When such an object is found, the controller 7 determines that it is a glove 19 and calculates its position. In particular, the position of the glove 19 is determined using a hand center 22 as a reference, while a hand top 21 is used to determine which component 2a - 2d is taken by the user 10.

In step S6 of Fig. 9, the controller 7 compares the position of the glove 19 determined in step S5 with the assembly instructions 23. This comparison corresponds to a verification if the component 2a - 2d taken out of the storage unit 4 by the user 10 is indeed the correct next component 2a - 2d according to the assembly instructions 23.

More specifically, the controller 7 may be configured to decide that a component has been retrieved from one of the storage units 4 if (a) the glove 19 makes a reciprocating movement, in which it first approaches the storage unit 4 and then recedes from that storage unit 4, and (b) the distance between a reference position of the storage unit 4 (e.g. the position of the corresponding label 5 and the glove 19 at the point of reciprocation (i.e. the point where the movement direction of the glove 19 is reversed or changed) is smaller than a threshold distance. In addition or alternatively, the controller 7 may also take into account other factors, such as the movement speed of the glove 19, the orientation of the glove 19, or whether the glove 19 remains for a minimum period of time (e.g. 0.3 sec) at the point of reciprocation.

In step S7 of Fig. 9, the controller 7 verifies whether the component 2a - 2d taken out of the storage unit 4 by the user 10 is indeed the correct next component 2a - 2d according to the assembly instructions 23. If the controller 7 determines that the component 2a - 2d taken out of the storage unit 4 by the user 10 is indeed the correct next component 2a - 2d according to the assembly instructions 23 ("YES" in step S7), the projector unit 8 emits a confirmation signal in step S8. Otherwise, if the controller 7 determines that the component 2a - 2d taken out of the storage unit 4 by the user 10 is not the correct next component 2a - 2d according to the assembly instructions 23 ("NO" in step S7), the projector unit 8 emits a warning signal in step S9.

To emit the confirmation signal (step S8), the projector unit 8 projects a green light onto the work surface 9 or another suitable surface of the assembly system 1. Furthermore, to emit the warning signal (step S9), the projector unit 8 projects a red light onto the work surface 9 or another suitable surface of the assembly system 1. That way, the user 10 can easily visualize whether he took the correct component 2a - 2d in view of the assembly instructions 23 or not.

Then, in step S10, the data about the match or mismatch determined in step S7 is stored in a cloud. The cloud can be accessed by an overlying control system.

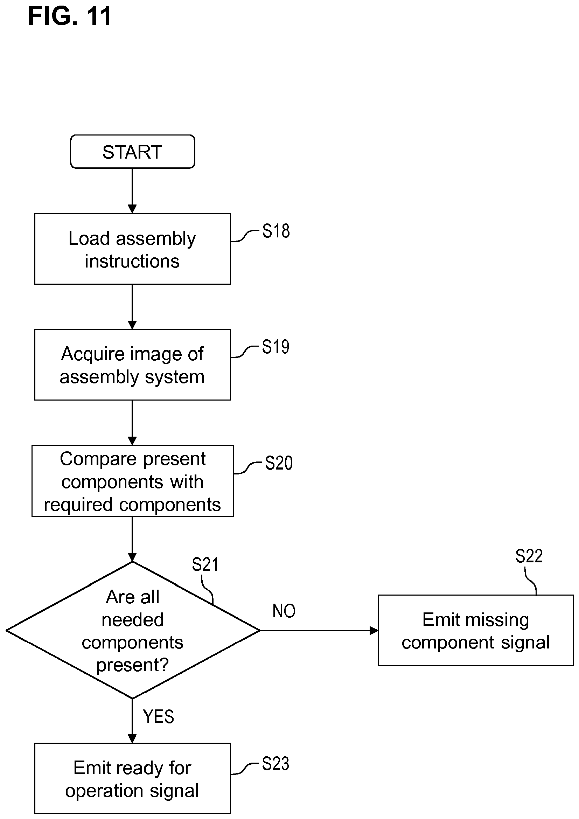

The assembly system 1 can also be operated according to the method of a fourth embodiment shown in Fig. 11. In detail, in step S18, the assembly instructions 23 are obtained from the overlaying control system. Then, in step S19, a color and depth image (or 3D color image) of the assembly system 1 is obtained by the camera unit 6.

In step S20 of Fig. 11, the controller 7 detects the labels 5, 5a - 5d of the assembly system 1 and derives the components 2a - 2d that are present in the assembly system 1 therefrom. The controller 7 then compares the components 2a - 2d that were determined to be present with a list of required components extracted from the assembly instructions 23.

In step S21 of Fig. 11, the controller 7 determines whether all components 2a - 2d which are needed to assemble the product 3 are present in the assembly system. If the controller 7 determines that at least one component 2a - 2d is missing ("NO" in step S21), the controller emits a missing component signal at step S22. The missing component signal indicates which component 2a - 2d is missing and is emitted to the user 10. Thereby, the user 10 is informed about the missing component 2a - 2d and can add said component 2a - 2d to the assembly system 1. The missing component signal may be any signal that is suitable to alert the user 10 to the fact that a component 2a - 2d is missing. For example, it may be written information, such as "Component XYZ is missing. Please retrieve from storage area ABC" that is projected onto the work surface 9 or any other suitable surface of the assembly system 1. This way, the user 10 can be informed about the lack of components 2a - 2d and the next action to be taken. Additionally, it is also possible to give an audible warning signal over speakers (not shown) provided in the assembly system 1.

Alternatively, when the controller 7 determines that all necessary components 2a - 2d are provided ("YES" in step S21), the controller emits a "ready for operation" signal at step S23. This "ready for operation" indicates that the user 10 can start assembling the components 2a - 2d to form the product 3.

Although the present invention has been described in accordance with preferred embodiments, it is obvious for the person skilled in the art that modifications are possible in all embodiments. For example, the storage units 4 can have different sizes, which the controller 7 is able to recognize by analyzing the position of the labels 5, 5a - 5d. Further, the assembly system may be capable of generating its own labels using a label generation unit, for example. Further, the projection of the assembly instructions by the projection unit can include a projection of light onto the storage unit comprising the next component to be taken by the user.

### REFERENCE NUMERALS

- 1: assembly system
- 2a - 2d: component
- 3: product
- 4, 4a - 4d: storage unit
- 5, 5a - 5d: label
- 6: camera unit
- 7: controller
- 8: projector unit
- 9: work surface
- 10: user
- 11: mirror
- 12: picking area
- 13: projector beam
- 14: monitored area
- 15a - 15f: further label
- 16a - 16f: predetermined position
- 17: glove image
- 18: hand
- 19: glove
- 20: measurement point
- 21: hand top
- 22: hand center
- 23: assembly instructions
- 24: projector unit image
- 25: camera unit image
- 30: work bench
- S1 - S23: method step

## Claims

1. An assembly system (1) for assisting a user (10) in assembling components (2a - 2d) into a product (3) in accordance with assembly instructions (23), the assembly system (1) comprising:
at least two storage units (4, 4a - 4d) for holding different components (2a - 2d);
machine-readable labels (5, 5a - 5d), each label (5, 5a - 5d) being attached to one of the storage units (4, 4a - 4d) and indicating a content of that storage unit (4, 4a - 4d);
a camera unit (6) configured to capture an image of the assembly system (1) including the labels (5, 5a - 5d); and
**characterized by**
a controller (7) configured to determine a respective position of the at least two storage units (4, 4a - 4d) based on the image captured by the camera unit (6) including the labels (5, 5a - 5d) and to determine the type of
components (2a - 2d) contained in the storage units (4, 4a - 4d) using the labels (5, 5a - 5d) of the image captured by the camera unit (6).

2. The assembly system according to claim 1, further comprising a projector unit (8) configured to project the assembly instructions (23) onto the assembly system (1) based on the positions of the at least two storage units (4, 4a - 4d) determined by the controller (7).

3. The assembly system according to claim 1 or 2, comprising further machine-readable labels (15a - 15f) indicating predetermined points (16a - 16f) of the assembly system (1), wherein the controller (7) is further configured to determine a size and/or shape of the assembly system (1) based on the image captured by the camera unit (6).

4. The assembly system according to any one of claims 1 to 3, wherein
the camera unit (6) is further configured to capture an image of a hand (18) of the user (10); and
the controller (7) is further configured to determine a position of the hand (18) of the user (10) based on the image of the hand (18) captured by the camera unit (6).

5. The assembly system according to claim 4, wherein the controller (7) is further configured to determine whether the components (2a - 2d) taken by the user (10) from the storage units (4, 4a - 4d) match the assembly instructions (23), based on the determined position of the hand (18) and on the determined position of the storage units (4, 4a - 4d).

6. The assembly system according to claim 5, wherein the projector unit (8) is further configured to project a confirmation signal and/or a warning signal onto the assembly system (1), based on the result of the determination whether the components (2a - 2d) taken by the user (10) from the storage units (4, 4a - 4d) match the assembly instructions (23).

7. The assembly system according to any one of claims 3 to 6, wherein
the camera unit (6) is further configured to capture an image of a glove (19) worn on the user's hand (18); and
the controller (7) is further configured to extract glove color information from the image of the glove (19) captured by the camera unit (6), to recognize whether an object present on another image captured by the camera unit (6) is a glove (19) based on the extracted glove color information, and to recognize the presence of the hand (18) of the user (10) when it recognizes that the object is a glove (19).

8. The assembly system according to any one of claims 1 to 7, wherein the controller (7) is further configured to:
determine which components (2a - 2d) are present in the assembly system (1) based on the image of the labels (5, 5a - 5d) captured by the camera unit (6); and
determine if all the components (2a - 2d) necessary for assembling the product (3) in accordance with the assembly instructions (23) are present in the assembly system (1) based on the components (2a - 2d) which are determined to be present.

9. The assembly system according to claim 8, wherein the projector unit (8) is configured to project a missing component signal and/or the controller (7) is configured to output the missing component signal if the controller (7) determines that the components (2a - 2d) necessary for assembling the product (3) are not all present in the assembly system (1).

10. The assembly system according to any one of claims 1 to 9, wherein
the projector unit (8) is configured to project a line onto a surface of the assembly system (1);
the camera unit (6) is configured to capture an image of the line projected by the projector unit (8); and
the controller (7) is configured to map a reference system of the camera unit (6) to a reference system of the projector unit (8) based on the captured image of the line.

11. The assembly system according to any one of claims 1 to 10, wherein the projector unit (8) is configured to project a light signal onto the storage unit (4, 4a - 4d) to indicate the next component (2a - 2d) according to the assembly instructions (23).

12. The assembly system according to any one of claims 1 to 11, wherein each label (5, 5a - 5d) allows a unique identification of the component (2a - 2d) contained in the storage unit (4, 4a - 4d) onto which the label (5, 5a - 5d) is attached.

13. The assembly system according to any one of claims 1 to 12, further comprising:
a label storage unit configured to store label information, each label information corresponding to a component (2a - 2d);
a label generation unit for generating label information for the components (2a - 2d) necessary to form the product (3) according to the assembly instructions (23) for which no label information is stored in the label storage unit.

14. A method for operating an assembly system (1) that assists a user (10) in assembling components (2a - 2d) into a product (3) in accordance with assembly instructions (23), the method comprising:
placing (S1) at least two storage units (4, 4a - 4d) holding different components (2a - 2d) in the assembly system (1), each storage unit (4, 4a - 4d) having a machine-readable label (5, 5a - 5d) attached thereto;
capturing (S2) an image of the assembly system (1) including the labels (5, 5a - 5d); and
**characterized by**
determining (S3) a respective position of the at least two storage units (4, 4a - 4d) based on the captured image including the labels (5, 5a - 5d) and determining the type of
components (2a - 2d) contained in the storage units (4, 4a - 4d) using the labels (5, 5a - 5d) of the image captured by the camera unit (6).

15. The method according to claim 14, which is implemented in the assembly system (1) according to any one of claims 1 to 13.

## Patentansprüche

1. Montagesystem (1) zur Unterstützung eines Benutzers (10) bei der Montage von Komponenten (2a - 2d) zu einem Produkt (3) in Übereinstimmung mit Montageanweisungen (23), wobei das Montagesystem (1) Folgendes umfasst:
zumindest zwei Speichereinheiten (4, 4a - 4d) zur Aufnahme verschiedener Komponenten (2a - 2d);
maschinenlesbare Etiketten (5, 5a - 5d), wobei jedes Etikett (5, 5a - 5d) an einer der Speichereinheiten (4, 4a - 4d) angebracht ist und einen Inhalt dieser Speichereinheit (4, 4a - 4d) angibt; und
eine Kameraeinheit (6), die ausgebildet ist, ein Bild des Montagesystems (1) einschließlich der Etiketten (5, 5a - 5d) zu erfassen;
**gekennzeichnet durch**
eine Steuerung (7), die ausgebildet ist, eine jeweilige Position der zumindest zwei Speichereinheiten (4, 4a - 4d) auf der Grundlage des von der Kameraeinheit (6) aufgenommenen Bildes einschließlich der Etiketten (5, 5a - 5d) zu bestimmen und die Art der in den Speichereinheiten (4, 4a - 4d) enthaltenen Komponenten (2a - 2d) unter Verwendung der Etiketten (5, 5a - 5d) des von der Kameraeinheit (6) aufgenommenen Bildes zu bestimmen.

2. Montagesystem nach Anspruch 1, weiterhin umfassend eine Projektoreinheit (8), die ausgebildet ist, die Montageanweisungen (23) auf der Grundlage der von der Steuerung (7) bestimmten Positionen der zumindest zwei Speichereinheiten (4, 4a - 4d) auf das Montagesystem (1) zu projizieren.

3. Montagesystem nach Anspruch 1 oder 2, weiterhin umfassend maschinenlesbare Etiketten (15a - 15f), die vorbestimmte Punkte (16a - 16f) des Montagesystems (1) anzeigen, wobei die Steuerung (7) weiterhin ausgebildet ist, eine Größe und/oder Form des Montagesystems (1) auf der Grundlage des von der Kameraeinheit (6) aufgenommenen Bildes zu bestimmen.

4. Montagesystem nach einem der Ansprüche 1 bis 3,
wobei die Kameraeinheit (6) weiterhin ausgebildet ist, ein Bild einer Hand (18) des Benutzers (10) aufzunehmen; und
wobei die Steuerung (7) weiterhin ausgebildet ist, eine Position der Hand (18) des Benutzers (10) auf der Grundlage des von der Kameraeinheit (6) aufgenommenen Bildes der Hand (18) zu bestimmen.

5. Montagesystem nach Anspruch 4, wobei die Steuerung (7) weiterhin ausgebildet ist, auf der Grundlage der ermittelten Position der Hand (18) und der ermittelten Position der Speichereinheiten (4, 4a - 4d) zu bestimmen, ob die von dem Benutzer (10) aus den Speichereinheiten (4, 4a - 4d) entnommenen Komponenten (2a - 2d) mit den Montageanweisungen (23) übereinstimmen.

6. Montagesystem nach Anspruch 5, wobei die Projektoreinheit (8) weiterhin dazu ausgebildet ist, basierend auf dem Ergebnis der Ermittlung, ob die von dem Benutzer (10) aus den Speichereinheiten (4, 4a - 4d) entnommenen Komponenten (2a - 2d) mit den Montageanweisungen (23) übereinstimmen, ein Bestätigungssignal und/oder ein Warnsignal auf das Montagesystem (1) zu projizieren.

7. Montagesystem nach einem der Ansprüche 3 bis 6, wobei
die Kameraeinheit (6) weiterhin ausgebildet ist, ein Bild eines an der Hand (18) des Benutzers getragenen Handschuhs (19) zu erfassen; und
die Steuerung (7) weiterhin ausgebildet ist, Handschuh-Farbinformationen aus dem von der Kameraeinheit (6) aufgenommenen Bild des Handschuhs (19) zu extrahieren, um zu erkennen, ob ein Objekt, das auf einem anderen von der Kameraeinheit (6) aufgenommenen Bild vorhanden ist, auf der Grundlage der extrahierten Handschuh-Farbinformationen ein Handschuh (19) ist, und um die Anwesenheit der Hand (18) des Benutzers (10) zu erkennen, wenn sie erkennt, dass es sich bei dem Objekt um einen Handschuh (19) handelt.

8. Montagesystem nach einem der Ansprüche 1 bis 7, wobei die Steuerung (7) weiterhin ausgebildet ist:
auf der Grundlage des von der Kameraeinheit (6) aufgenommenen Bildes der Etiketten (5, 5a - 5d) zu bestimmen, welche Komponenten (2a - 2d) in dem Montagesystem vorhanden sind; und
auf der Grundlage der Komponenten (2a - 2d), deren Vorhandensein festgestellt wurde, zu bestimmen, ob alle Komponenten (2a - 2d), die für die Montage des Produkts (3) gemäß der Montageanleitung (23) erforderlich sind, in dem Montagesystem (1) vorhanden sind.

9. Montagesystem nach Anspruch 8, wobei die Projektoreinheit (8) ausgebildet ist, ein Signal für fehlende Komponenten zu projizieren, und/oder wobei die Steuerung (7) ausgebildet ist, das Signal für fehlende Komponenten auszugeben, wenn die Steuerung (7) feststellt, dass die für die Montage des Produkts (3) erforderlichen Komponenten (2a - 2d) nicht alle in dem Montagesystem (1) vorhanden sind.

10. Montagesystem nach einem der Ansprüche 1 bis 9, wobei die Projektoreinheit (8) ausgebildet ist, eine Linie auf eine Oberfläche des Montagesystems (1) zu projizieren;
wobei die Kameraeinheit (6) ausgebildet ist, ein Bild der von der Projektoreinheit (8) projizierten Linie aufzunehmen; und
wobei die Steuerung (7) ausgebildet ist, ein Referenzsystem der Kameraeinheit (6) auf der Grundlage des aufgenommenen Bildes der Linie einem Referenzsystem der Projektoreinheit (8) zuzuordnen.

11. Montagesystem nach einem der Ansprüche 1 bis 10, wobei die Projektoreinheit (8) ausgebildet ist, ein Lichtsignal auf die Speichereinheit (4, 4a - 4d) zu projizieren, um die nächste Komponente (2a - 2d) gemäß den Montageanweisungen (23) anzugeben.

12. Montagesystem nach einem der Ansprüche 1 bis 11, wobei jedes Etikett (5, 5a - 5d) eine eindeutige Identifizierung der in der Speichereinheit (4, 4a - 4d) enthaltenen Komponente (2a - 2d) ermöglicht, auf der das Etikett (5, 5a - 5d) angebracht ist.

13. Montagesystem nach einem der Ansprüche 1 bis 12, weiterhin umfassend:
eine Etikettenspeichereinheit, die ausgebildet ist, Etiketteninformationen zu speichern, wobei jede Etiketteninformation einer Komponente (2a - 2d) entspricht;
eine Etikettenerzeugungseinheit zum Erzeugen von Etiketteninformationen für die Komponenten (2a - 2d), die erforderlich sind, um das Produkt (3) gemäß den Montageanweisungen (23) zu bilden, für die keine Etiketteninformationen in der Etikettenspeichereinheit gespeichert sind.

14. Verfahren zum Betreiben eines Montagesystems (1), das einen Benutzer (10) bei der Montage von Komponenten (2a - 2d) zu einem Produkt (3) gemäß Montageanweisungen (23) unterstützt, wobei das Verfahren umfasst:
Platzieren (S1) von zumindest zwei Speichereinheiten (4, 4a - 4d), die unterschiedliche Komponenten (2a - 2d) enthalten, in dem Montagesystem (1), wobei an jeder Speichereinheit (4, 4a - 4d) ein maschinenlesbares Etikett (5, 5a - 5d) angebracht ist;
Erfassen (S2) eines Bildes des Montagesystems (1) einschließlich der Etiketten (5, 5a - 5d); und
**gekennzeichnet durch**
Bestimmen (S3) einer jeweiligen Position der zumindest zwei Speichereinheiten (4, 4a - 4d) auf der Grundlage des erfassten Bildes einschließlich der Etiketten (5, 5a - 5d) und Bestimmen der Art der in den Speichereinheiten (4, 4a - 4d) enthaltenen Komponenten (2a - 2d) unter Verwendung der Etiketten (5, 5a - 5d) des von der Kameraeinheit (6) aufgenommenen Bildes.

15. Verfahren nach Anspruch 14, das in dem Montagesystem (1) nach einem der Ansprüche 1 bis 13 implementiert ist.

## Revendications

1. Système d'assemblage (1) destiné à aider un utilisateur (10) à assembler des composants (2a - 2d) en un produit (3) conformément à des instructions d'assemblage (23), le système d'assemblage (1) comprenant :
au moins deux unités de stockage (4, 4a - 4d) destinées à contenir différents composants (2a - 2d) ;
des étiquettes lisibles par machine (5, 5a - 5d), chaque étiquette (5, 5a - 5d) étant apposée à l'une des unités de stockage (4, 4a - 4d) et indiquant un contenu de cette unité de stockage (4, 4a - 4d) ;
une unité caméra (6) configurée pour capturer une image du système d'assemblage (1) comprenant les étiquettes (5, 5a - 5d) ; et
**caractérisé par**
un organe de commande (7) configuré pour déterminer une position respective des au moins deux unités de stockage (4, 4a - 4d) sur la base de l'image capturée par l'unité caméra (6) comprenant les étiquettes (5, 5a - 5d) et pour déterminer le type de composants (2a - 2d) contenus dans les unités de stockage (4, 4a - 4d) au moyen des étiquettes (5, 5a - 5d) de l'image capturée par l'unité caméra (6).

2. Système d'assemblage selon la revendication 1, comprenant en outre une unité projecteur (8) configurée pour projeter les instructions d'assemblage (23) sur le système d'assemblage (1) sur la base des positions des au moins deux unités de stockage (4, 4a - 4d) déterminées par l'organe de commande (7).

3. Système d'assemblage selon la revendication 1 ou la revendication 2, comprenant en outre des étiquettes lisibles par machine (15a - 15:0 indiquant des points prédéterminés (16a - 16f) du système d'assemblage (1), dans lequel l'organe de commande (7) est en outre configuré pour déterminer une taille et/ou une forme du système d'assemblage (1) sur la base de l'image capturée par l'unité caméra (6).

4. Système d'assemblage selon l'une quelconque des revendications 1 à 3, dans lequel
l'unité caméra (6) est en outre configurée pour capturer une image d'une main (18) de l'utilisateur (10) ; et
l'organe de commande (7) est en outre configuré pour déterminer une position de la main (18) de l'utilisateur (10) sur la base de l'image de la main (18) capturée par l'unité caméra (6).

5. Système d'assemblage selon la revendication 4, dans lequel l'organe de commande (7) est en outre configuré pour déterminer si les composants (2a - 2d) prélevés par l'utilisateur (10) dans les unités de stockage (4, 4a - 4d) correspondent aux instructions d'assemblage (23), sur la base de la position déterminée de la main (18) et de la position déterminée des unités de stockage (4, 4a - 4d).

6. Système d'assemblage selon la revendication 5, dans lequel l'unité projecteur (8) est en outre configurée pour projeter un signal de confirmation et/ou un signal d'avertissement sur le système d'assemblage (1), sur la base du résultat de la détermination du fait que les composants (2a - 2d) prélevés par l'utilisateur (10) dans les unités de stockage (4, 4a - 4d) correspondent, ou non, aux instructions d'assemblage (23).

7. Système d'assemblage selon l'une quelconque des revendications 3 à 6, dans lequel
l'unité caméra (6) est en outre configurée pour capturer une image d'un gant (19) porté sur la main (18) de l'utilisateur ; et
l'organe de commande (7) est en outre configuré pour extraire des informations de couleur de gant à partir de l'image du gant (19) capturée par l'unité caméra (6), pour reconnaître si un objet présent sur une autre image capturée par l'unité caméra (6) est un gant (19) sur la base des informations de couleur de gant extraites, et pour reconnaître la présence de la main (18) de l'utilisateur (10) lorsqu'il reconnaît que l'objet est un gant (19).

8. Système d'assemblage selon l'une quelconque des revendications 1 à 7, dans lequel l'organe de commande (7) est en outre configuré pour :
déterminer les composants (2a - 2d) qui sont présents dans le système d'assemblage (1) sur la base de l'image des étiquettes (5, 5a - 5d) capturée par l'unité caméra (6) ; et
déterminer si tous les composants (2a - 2d) nécessaires à l'assemblage du produit (3) conformément aux instructions d'assemblage (23) sont présents dans le système d'assemblage (1) sur la base des composants (2a - 2d) déterminés comme étant présents.

9. Système d'assemblage selon la revendication 8, dans lequel l'unité projecteur (8) est configurée pour projeter un signal de composant manquant et/ou l'organe de commande (7) est configuré pour délivrer le signal de composant manquant si l'organe de commande (7) détermine que les composants (2a - 2d) nécessaires à l'assemblage du produit (3) ne sont pas tous présents dans le système d'assemblage (1).

10. Système d'assemblage selon l'une quelconque des revendications 1 à 9, dans lequel
l'unité projecteur (8) est configurée pour projeter une ligne sur une surface du système d'assemblage (1) ;
l'unité caméra (6) est configurée pour capturer une image de la ligne projetée par l'unité projecteur (8) ; et
l'organe de commande (7) est configuré pour mettre en correspondance un système de référence de l'unité caméra (6) avec un système de référence de l'unité projecteur (8) sur la base de l'image capturée de la ligne.

11. Système d'assemblage selon l'une quelconque des revendications 1 à 10, dans lequel l'unité projecteur (8) est configurée pour projeter un signal lumineux sur l'unité de stockage (4, 4a - 4d) de façon à indiquer le composant suivant (2a - 2d) conformément aux instructions d'assemblage (23).

12. Système d'assemblage selon l'une quelconque des revendications 1 à 11, dans lequel chaque étiquette (5, 5a - 5d) permet une identification unique du composant (2a - 2d) contenu dans l'unité de stockage (4, 4a - 4d) à laquelle est apposée l'étiquette (5, 5a - 5d).

13. Système d'assemblage selon l'une quelconque des revendications 1 à 12, comprenant en outre :
une unité de mémorisation d'étiquettes configurée pour mémoriser des informations d'étiquettes, les informations d'étiquettes correspondant individuellement à un composant (2a - 2d) ;
une unité de génération d'étiquettes destinées à générer des informations d'étiquettes des composants (2a - 2d) nécessaires pour former le produit (3) conformément aux instructions d'assemblage (23) pour lesquels il n'y a pas d'informations d'étiquettes mémorisées dans l'unité de mémorisation d'étiquettes.

14. Procédé de mise en œuvre d'un système d'assemblage (1) qui aide un utilisateur (10) à assembler des composants (2a - 2d) en un produit (3) conformément à des instructions d'assemblage (23), le procédé comprenant les étapes consistant à :
placer (S1) au moins deux unités de stockage (4, 4a - 4d) contenant différents composants (2a - 2d) dans le système d'assemblage (1), chaque unité de stockage (4, 4a - 4d) comportant une étiquette lisible par machine (5, 5a - 5d) apposée à cette dernière ;
capturer (S2) une image du système d'assemblage (1) comprenant les étiquettes (5, 5a - 5d) ; et
**caractérisé par** l'étape consistant à
déterminer (S3) une position respective des au moins deux unités de stockage (4, 4a - 4d) sur la base de l'image capturée comprenant les étiquettes (5, 5a - 5d) et déterminer le type de composants (2a - 2d) contenus dans les unités de stockage (4, 4a - 4d) au moyen des étiquettes (5, 5a - 5d) de l'image capturée par l'unité caméra (6).

15. Procédé selon la revendication 14, qui est implémenté dans le système d'assemblage (1) selon l'une quelconque des revendications 1 à 13.
